# EUROPÄISCHE PATENTSCHRIFT

(11) **EP 4 147 553 B1**
(45) Veröffentlichungstag und Bekanntmachung des Hinweises auf die Patenterteilung: **08.04.2026**
(21) Anmeldenummer: 22180942.9
(22) Anmeldetag: 24.06.2022
(51) Int. Cl.: A01B 69/00

(54) **STEUERUNGSSYSTEM ZUM LENKEN EINER LANDWIRTSCHAFTLICHEN ARBEITSMASCHINE**
CONTROL SYSTEM FOR STEERING AN AGRICULTURAL WORKING MACHINE
SYSTÈME DE COMMANDE PERMETTANT DE DIRIGER UNE MACHINE DE TRAVAIL AGRICOLE

(30) Priorität: 14.09.2021 DE 102021123694
(43) Veröffentlichungstag der Anmeldung: 15.03.2023
(73) Patentinhaber: CLAAS E-Systems GmbH, 49201 Dissen (DE)
(72) Erfinder: Töniges, Torben, 33602 Bielefeld (DE); Redenius, Jannik, 32361 Pr. Oldendorf (DE); Bone, Sven, 49124 Georgsmarienhütte (DE); Lücke, Andreas, 33184 Altenbeken (DE); Skiba, Andreas, 33647 Bielefeld (DE); Porczek, Sebastian, 33102 Paderborn (DE); Angas, Klaus, 33415 Verl (DE)
(74) Vertreter: CLAAS Gruppe

(56) Entgegenhaltungen:
- EP-A1- 3 889 726
- WO-A1-2020/061362
- WO-A1-2020/076427
- DE-A1- 102018 210 379

## Beschreibung

Die vorliegende Erfindung betrifft ein Steuerungssystem zum Lenken einer landwirtschaftlichen Arbeitsmaschine gemäß dem Oberbegriff des Anspruches 1. Weiterhin betrifft die Erfindung ein Verfahren zum Betreiben eines Steuerungssystems zum Lenken einer landwirtschaftlichen Arbeitsmaschine gemäß dem Oberbegriff des Anspruches 12.

Aus der WO2020/061362 A1 ist ein System zum autonomen Rückwärtsfahren eines Traktors sowie ein Verfahren zum Manövrieren eines Traktors im Rückwärtsgang zum Ankoppeln an einen Anhänger unter Verwendung eines Ankopplungsassistenzsystems bekannt. Von einer Bedienperson wird ein anzukoppelnder Anhänger ausgewählt, welcher durch eine an dem Traktor angeordnete Kamera identifiziert wurde. Mittels eines Wegplanungssystems wird eine zurückzulegende Wegstrecke bestimmt, mit einem Startpunkt, an welchem sich der Traktor befindet, und einem Endpunkt, an dem sich der anzukoppelnde Anhänger befindet. Die berechnete Wegstrecke wird von dem Traktor bis zum Erreichen des Anhängers autonom zurückgelegt. Während der Rückwärtsfahrt wird die zurückgelegte Wegstrecke kontinuierlich hinsichtlich des Auftreten von Hindernissen auf der berechneten Wegstrecke überwacht, um die Wegstrecke erforderlichenfalls anzupassen.

Die WO 2020/076427 A1 hat ein Lenksystem zum Lenken einer landwirtschaftlichen Arbeitsmaschine und einem daran angeordneten gezogenen Anbaugerät gemäß dem Oberbegriff des Anspruches 1 zum Gegenstand. Zum Ablegen bzw. Abstellen des Anbaugerätes werden ein Zielpunkt zur Ablage in einem Ablagebereich und ein durch Rückwärtsfahrt der Arbeitsmaschine zurückzulegender Fahrweg zu diesem Zielpunkt bestimmt. Es werden vom Lenksystem Lenkbefehle berechnet, um das Anbaugerät auf dem Fahrweg automatisch zu lenken.

Ein weiteres Steuerungssystem und Verfahren zum Lenken einer landwirtschaftlichen Arbeitsmaschine gemäß dem Oberbegriff des Anspruchs 1 ist aus der Druckschrift DE 10 2018 210379 A1 bekannt. Diese Druckschrift beschreibt ein Steuerungssystem zum Lenken einer landwirtschaftlichen Arbeitsmaschine mit zumindest einer daran angeordneten und/oder von dieser gezogenen Vorrichtung, wobei das Steuerungssystem eine Steuereinheit mit einer Speichereinheit zum abrufbaren Hinterlegen von Daten sowie eine Recheneinheit umfasst, welche dazu eingerichtet ist, die in der Speichereinheit hinterlegten Daten sowie eine Recheneinheit umfasst, welche dazu eingerichtet ist, die in der Speichereinheit hinterlegten Daten zu verarbeiten und daraus Lenksignale zur Ansteuerung einer Lenkeinrichtung der Arbeitsmaschine zu generieren. Das Steuerungssystem ist dazu eingerichtet, einen Lernmodus auszuführen, um in dem Lernmodus Daten eines Lenk- und Fahrverhaltens, welches auf zumindest ein durch eine Bedienperson manuell gesteuertes Lenkmanöver zurückgeht, zu erfassen und als zumindest einen ausführbaren Steuerverlauf in der Speichereinheit abrufbar zu hinterlegen.

Der Erfindung liegt die Aufgabe zugrunde, ein Steuerungssystem sowie ein Verfahren der eingangs genannten Art weiterzubilden, wodurch eine Bedienperson der landwirtschaftlichen Arbeitsmaschine beim Navigieren und Rangieren mit angeordneten und/oder gezogenen Vorrichtung in wiederkehrenden Situationen entlastet wird.

Die Aufgabe wird gelöst durch ein Steuerungssystem zum Lenken einer landwirtschaftlichen Arbeitsmaschine mit den Merkmalen des unabhängigen Patentanspruchs 1 sowie ein Verfahren zum Betreiben eines Steuerungssystems zum Lenken einer landwirtschaftlichen Arbeitsmaschine mit den Merkmalen des nebengeordneten Patentanspruchs 12.

Vorteilhafte Ausführungsformen und Weiterbildungen sind den hiervon abhängigen Ansprüchen zu entnehmen.

Gemäß dem Anspruch 1 wird ein Steuerungssystem zum Lenken einer landwirtschaftlichen Arbeitsmaschine mit zumindest einer daran angeordneten und/oder von dieser gezogenen Vorrichtung vorgeschlagen, wobei das Steuerungssystem eine Steuereinheit, eine Speichereinheit zum abrufbaren Hinterlegen von Daten sowie eine Recheneinheit umfasst, welche dazu eingerichtet ist, die in der Speichereinheit hinterlegten Daten zu verarbeiten und daraus Lenksignale zur Ansteuerung einer Lenkeinrichtung der Arbeitsmaschine zu generieren. Erfindungsgemäß ist vorgesehen, dass das Steuerungssystem dazu eingerichtet ist, einen manuell initiierten Lernmodus auszuführen, um in dem Lernmodus Daten eines Lenk- und Fahrverhaltens, welches auf zumindest ein durch eine Bedienperson manuell gesteuertes Lenkmanöver zurückgeht, zu erfassen und als zumindest einen ausführbaren Steuerverlauf in der Speichereinheit abrufbar zu hinterlegen.

Der Erfindung liegt die Überlegung zugrunde, dass die Bedienperson bei schwierigen, insbesondere sich im Arbeitsalltag wiederholenden, Fahrmanövern mit der landwirtschaftlichen Arbeitsmaschine und der daran angeordneten und/oder gezogenen Vorrichtung eine Unterstützung erfährt, um die Bedienperson zu entlasten. Lenkmanövern umfassen dabei das Manövrieren und/oder Rangieren in schwierigen Situationen wie dem Einparken, dem Ansteuern bzw. Anfahren eines Anschlusses an einem Behälter zur Aufnahme einer Flüssigkeit, dem Ankoppeln und Abkoppeln der gezogenen Vorrichtung, dem Aufnehmen und Absetzen der Vorrichtung, dem Passieren von Passagen, deren Breite die Breite der landwirtschaftlichen Arbeitsmaschine und der daran angeordneten Vorrichtung und/oder gezogenen Vorrichtung nur geringfügig überschreitet und/oder dem Umfahren von Hindernissen. Indem die Bedienperson den Lernmodus manuell initiiert, werden alle von der Bedienperson im Verlauf des Manövrierens und/oder Rangierens manuell durchgeführten Lenkmanöver erfasst und als ausführbarer Steuerverlauf in der Speichereinheit abrufbar hinterlegt. Der Begriff "Lenkmanöver" ist weit zu verstehen und umfasst dabei nicht nur das Betätigen einer Lenkvorrichtung, beispielsweise eines Lenkrades, sondern zudem damit zeitgleich in Zusammenhang stehende Eingriffe in den Fahrbetrieb wie das Beschleunigen, Verzögern und/oder Gangwechsel. Während des Lernmodus können ein Startpunkt sowie ein Endpunkt der Fahrt, auch automatisch, bestimmt und in dem aufgezeichneten Steuerverlauf als Daten hinterlegt werden.

Unter dem Begriff "angeordnete Vorrichtung" sind Anbaugeräte zu verstehen, die unmittelbar an einer Aufnahmevorrichtung der Arbeitsmaschine angeordnet sind und zum Transport mit der Arbeitsmaschine zum Boden beabstandet mitgeführt werden, sofern diese nicht über Bodeneingriffsmittel wie Stützräder verfügen, die dem Transport dienen, beispielsweise ein Maisgebiss oder ein Pflug. Unter dem Begriff "gezogene Vorrichtung" sind insbesondere Anhänger sowie Anbaugeräte mit Bodeneingriffsmitteln, beispielsweise eine Ballenpresse, zu verstehen.

Darüber hinaus kann vorgesehen sein, dass das Steuerungssystem dazu eingerichtet sein kann, alle während des Lernmodus im zeitlichen und/oder räumlichen Zusammenhang stehenden, von der Bedienperson initiierten und von der Arbeitsmaschine ausgeführten Abläufe, die über das Ausführen von Lenkmanövern hinausgehen, zu erfassen und aufzuzeichnen. Das Steuerungssystem kann dazu eingerichtet sein, diese Abläufe dem Steuerverlauf chronologisch zuzuordnen. Von der Bedienperson initiierte und von der Arbeitsmaschine ausgeführte Abläufe umfassen insbesondere das Ansteuern von Aktoren der Arbeitsmaschine während des Lernmodus, welche der Handhabung von an der Arbeitsmaschine angeordneten Vorrichtungen dienen. Aktoren der Arbeitsmaschine können beispielsweise einzelne Hydraulikzylinder sein, mit welchen ein Front- oder Heckhubwerk oder ein Einzugskanal betätigt werden, um beispielsweise ein Anbaugerät an- oder abzukoppeln oder ein Vorsatzgerät aufzunehmen oder abzusetzen.

Insbesondere kann das Steuerungssystem dazu eingerichtet sein, die in der Speichereinheit hinterlegten ausführbaren Steuerverläufe zu einem späteren Zeitpunkt ereignisabhängig abzurufen. Ein ereignisabhängiges Abrufen kann ein manuelles Abrufen eines von der Bedienperson ausgewählten Steuerverlaufs sein. Ein ereignisabhängiges Abrufen kann auf das automatisierte Erkennen einer aktuellen Betriebssituation zurückzuführen sein.

Bevorzugt kann das Steuerungssystem dazu eingerichtet sein, einen ausführbaren Steuerverlauf manuell durch einen Abruf durch die Bedienperson auszulösen und/oder automatisch in Abhängigkeit von einer durch das Steuerungssystem erkannten Betriebssituation der landwirtschaftlichen Arbeitsmaschine.

Erfindungsgemäß ist das Steuerungssystem dazu eingerichtet, anhand einer Bestimmung eines Startpunktes und eines Endpunktes den korrespondierenden, in der Speichereinheit hinterlegten Steuerverlauf zu ermitteln, welcher in einem vorangehend ausgeführten Lernmodus zwischen diesem Startpunkt und diesem Endpunkt ausgeführte Lenkmanöver umfasst, und auszuführen. Beispielsweise kann durch das manuelle Eingeben von Startpunkt und Endpunkt mittels einer Eingabe-Ausgabeeinheit des Steuerungssystems eine Auswahl des korrespondierenden Steuerverlaufs durch das Steuerungssystem getroffen werden.

Gemäß einer bevorzugten Weiterbildung kann das Steuerungssystem dazu eingerichtet sein, Steuerverläufe, die während wiederholt ausgeführter Lernmodi zwischen demselben Startpunkt und demselben Endpunkt aufgezeichnet wurden, miteinander zu vergleichen und zu adaptieren. Durch den Vergleich der aufgezeichneten Steuerverläufe lassen sich einzelne Teillenkmanöver bestimmen, welche in einem adaptierten Steuerverlauf zusammengefasst werden, um das durch das Steuerungssystem auszuführende Lenkmanöver zu optimieren.

Insbesondere kann das Steuerungssystem zumindest eine Sensoranordnung, insbesondere mehrere Sensoranordnungen, umfassen, welche dazu eingerichtet ist bzw. sind, Daten bereitzustellen, aus denen sich das Lenk- und Fahrverhalten während des Lernmodus ermitteln lässt. Beispielsweise kann ein dem Antriebsstrang zugeordneter Drehzahlsensor Daten bereitstellen, welche das Beschleunigen und Verzögern der landwirtschaftlichen Arbeitsmaschine während des Lernmodus betreffen. Weitere Daten des Antriebsstranges, die sensorisch erfasst werden können, können das Drehmoment sowie der gewählte Schaltgang sein. Ebenso kann der Lenkvorrichtung ein Lenkwinkelsensor zugeordnet sein, um von der Bedienperson ausgeführte Lenkbewegungen zu erfassen. Des Weiteren kann ein Positionsortungssensor an der Arbeitsmaschine vorgesehen sein, so dass sowohl Startpunkt, Endpunkt als auch eine zwischen diesen zurückgelegte Wegstrecke protokollierbar ist.

Hierzu kann das Steuerungssystem dazu eingerichtet sein, die Daten der zumindest einen Sensoranordnung in einen zeitlichen Zusammenhang mit dem durch die Bedienperson manuell ausgeführten Lenkmanöver zu setzen und auszuwerten und im abzuspeichernden Steuerverlauf zu hinterlegen. Auf diese Weise können allen Bewegungen der Arbeitsmaschine und/oder der Vorrichtung während des Navigierens und Rangierens Handlungen der Bedienperson zeitlich zugeordnet werden, die für das Navigieren und Rangieren erforderlich sind.

Gemäß einer Weiterbildung kann das Steuerungssystem dazu eingerichtet sein, das Abspeichern des während des Lernmodus durchgeführten Lenk- und Fahrverhaltens in Abhängigkeit von der Art bzw. Gattung und/oder dem Typ der an der Arbeitsmaschine angeordneten und/oder gezogenen Vorrichtung vorzunehmen. Bei der Art kann zwischen gezogenen Vorrichtungen und an der Arbeitsmaschine angeordneten Vorrichtungen sowie deren Einsatzzweck unterschieden werden. Die Kategorisierung nach unterschiedlichen Typen kann beispielsweise auf der Basis von Herstellern sowie Modellbezeichnungen erfolgen.

Insbesondere kann als eine Sensoranordnung zumindest eine optische Sensoreinrichtung an der Arbeitsmaschine angeordnet sein, welche zur Umfelderkennung eingerichtet ist. Bevorzugt sind zumindest zwei optische Sensoreinrichtungen vorgesehen, welche die Umgebung der Arbeitsmaschine zumindest in Vorwärtsfahrtrichtung und in Rückwärtsfahrtrichtung erfassen können. Weiterhin können optische Sensoreinrichtungen vorgesehen sein, welche das seitliche Umfeld der Arbeitsmaschine und der daran angeordneten oder gezogenen Vorrichtung erfassen.

Insbesondere kann die optische Sensoreinrichtung, welcher zur Erfassung der Umgebung in Rückwärtsfahrtrichtung eingerichtet ist, den Koppelpunkt zwischen der Arbeitsmaschine und der gezogenen Vorrichtung erfassen. Die gezogene Vorrichtung weist im Allgemeinen eine Deichsel oder dergleichen auf, mit welcher die Vorrichtung an die Arbeitsmaschine angekoppelt ist. Hierdurch lassen sich den ausgeführten Lenkbewegungen der Arbeitsmaschine die entsprechenden Reaktionen der gezogenen Vorrichtung zuordnen. Beispielsweise lassen sich Bedienfehler beim Lenken und darauffolgende Korrekturlenkbewegungen erfassen und auswerten.

Gemäß einem weiteren Aspekt kann das Steuerungssystem dazu eingerichtet sein, in Abhängigkeit von einer Auswertung der von der zumindest einen optischen Sensoreinrichtung bereitgestellten Bilddaten eine bevorstehende Betriebssituation zu erkennen, für die das Lenk- und Fahrverhalten während eines Lernmodus bereits aufgezeichnet und abgespeichert wurde. Eine Betriebssituation kann beispielsweise das Verbringen der Arbeitsmaschine in eine Parkposition auf einer Hofstätte sein. Eine Betriebssituation kann weiterhin das Aufnehmen oder Ankoppeln der Vorrichtung sein, wenn die Arbeitsmaschine auf eine Vorrichtung zufährt und die Vorrichtung als solche erkannt wird, für die zumindest ein korrespondierender Steuerverlauf in der Speichereinheit hinterlegt ist. Das Erkennen einer Betriebssituation ermöglicht es, dass durch das Steuerungssystem zumindest ein Vorschlag für einen Steuerverlauf auf der Eingabe-Ausgabeeinheit ausgegeben wird, wie in einer vergleichbaren oder identischen Betriebssituation verfahren worden ist, d.h. welche Lenkmanöver in einem früher durchgeführten Lenkmodus aufgezeichnet wurden. Das Erkennen einer Betriebssituation kann zudem unabhängig von der zumindest einen optischen Sensoreinrichtung oder unterstützt durch den Positionsortungssensor an der Arbeitsmaschine erfolgen. Beispielsweise kann eine bestehende Parkposition der Arbeitsmaschine erkannt werden, welche bei Inbetriebnahme der Arbeitsmaschine verlassen werden soll.

Weiterhin kann das Steuerungssystem dazu eingerichtet sein, in Abhängigkeit von der erkannten bevorstehenden Betriebssituation zumindest einen Vorschlag zu unterbreiten, welches Lenkmanöver anhand der in der Speichereinheit hinterlegten Steuerverläufe für Lenk- und Fahrverhalten in der erkannten Betriebssituation ausführbar ist.

Insbesondere kann das Steuerungssystem dazu eingerichtet sein, einen aus der Speichereinheit abgerufenen Steuerverlauf in umgekehrter Reihenfolge auszuführen.

Die eingangs gestellte Aufgabe wird zudem durch Verfahren zum Betreiben eines Steuerungssystems zum Lenken einer landwirtschaftlichen Arbeitsmaschine mit den Merkmalen des nebengeordneten Anspruchs 12 gelöst.

Gemäß dem Anspruch 12 wird ein Verfahren zum Betreiben eines Steuerungssystems zum Lenken einer landwirtschaftlichen Arbeitsmaschine mit zumindest einer daran angeordneten und/oder von dieser gezogenen Vorrichtung vorgeschlagen, wobei das Steuerungssystem eine Steuereinheit, eine Speichereinheit zum abrufbaren Hinterlegen von Daten sowie eine Recheneinheit umfasst, durch die in der Speichereinheit hinterlegte Daten verarbeitet werden, um daraus Lenksignale zu generieren, mit denen eine Lenkeinrichtung der Arbeitsmaschine angesteuert wird, wobei ein manuell initiierter Lernmodus ausgeführt wird, in welchem Daten eines Lenk- und Fahrverhaltens, das auf zumindest ein durch eine Bedienperson manuell gesteuertes Lenkmanöver zurückgeht, erfasst und als ausführbarer Steuerverlauf in der Speichereinheit abrufbar hinterlegt werden, und anhand einer Bestimmung eines Startpunktes und eines Endpunktes der korrespondierende, in der Speichereinheit hinterlegte Steuerverlauf, welcher in einem vorangehend ausgeführten Lernmodus zwischen diesem Startpunkt und diesem Endpunkt ausgeführte Lenkmanöver umfasst, ermittelt und ausgeführt wird.

Auf die Vorteile des erfindungsgemäßen Steuerungssystems darf verwiesen werden.

Dabei kann in Abhängigkeit von einer erkannten Betriebssituation der landwirtschaftlichen Arbeitsmaschine oder einem manuellen Auslösen durch die Bedienperson ein in der Speichereinheit hinterlegter ausführbarer Steuerverlauf abgerufen und von dem Steuerungssystem zum Lenken der landwirtschaftlichen Arbeitsmaschine ausgeführt werden.

Bevorzugt können als Fahrverhalten alle während eines Lernmodus von der Bedienperson initiierten und von der Arbeitsmaschine ausgeführten Abläufe, die über das Lenken hinausgehen, erfasst und dem Steuerverlauf zugeordnet werden. Dabei umfasst der Begriff "Fahrverhalten" neben den Lenkmanövern, von der Arbeitsmaschine zusätzlich auszuführende Abläufe, welche im unmittelbaren zeitlichen und/oder räumlichen Zusammenhang mit den zu erfassenden Lenkmanövern stehen. Beispielsweise kann ein während des Lenkmanövers zu erfassender Ablauf das Ankoppeln bzw. Abkoppeln eines Anbaugerätes oder das Aufnehmen oder Absetzen eines Vorsatzgerätes sein. Das Ankoppeln bzw. Abkoppeln eines Anbaugerätes oder das Aufnehmen oder Absetzen eines Vorsatzgerätes umfasst das gezielte Ansteuern von Aktoren der Arbeitsmaschine, was durch die Bedienperson initiiert wird.

Gemäß einer Weiterbildung kann zumindest ein Steuerverlauf situativ zur Ausführung durch das Steuerungssystem vorgeschlagen werden. Dies kann beispielsweise basierend auf einer Umfelderkennung und/oder anhand einer Eingabe eines Startpunktes und eines Endpunktes erfolgen, für welche bereits aufgezeichnete und abgespeicherte Steuerverläufe hinterlegt worden sind.

Die vorliegende Erfindung wird nachstehend anhand eines in den Zeichnungen dargestellten Ausführungsbeispieles näher erläutert.

Es zeigen:
- Fig. 1: eine schematische Darstellung eines Steuerungssystems zum Lenken einer landwirtschaftlichen Arbeitsmaschine;
- Fig. 2: a) schematisch ein Flussdiagramm eines exemplarischen Ablaufs eines Lernmodus, b) schematisch ein Flussdiagramm eines exemplarischen Ablaufs eines erweiterten Lernmodus und c) schematisch ein Flussdiagramm eines exemplarischen Ablaufs einer Ausführung eines im Lernmodus aufgezeichneten Steuerverlaufs;
- Fig. 3: a) bis d) eine schematische Darstellung eines Einparkvorganges der landwirtschaftlichen Arbeitsmaschine mit daran angekoppeltem Transportwagen; und
- Fig. 4: a) bis d) eine schematische Darstellung des Einparkvorganges gemäß der Fig. 3 a) bis 3 d) unter Berücksichtigung eines Hindernisses.

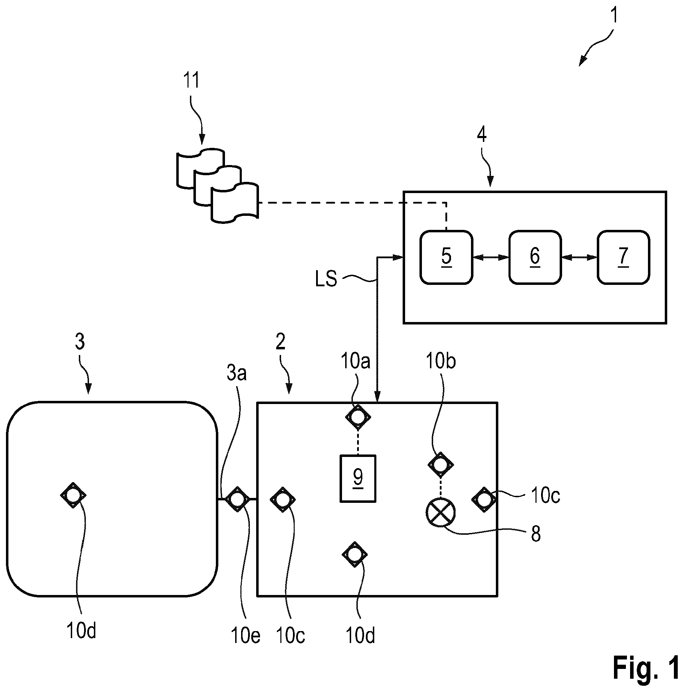

In Fig. 1 ist schematisch anhand eines Ausführungsbeispiels der grundsätzliche Aufbau eines vorschlagsgemäßen Steuerungssystems 1 zum Lenken einer landwirtschaftlichen Arbeitsmaschine 2 und einer daran angeordneten und/oder von dieser gezogenen Vorrichtung 3 dargestellt. Die landwirtschaftliche Arbeitsmaschine 2 kann als selbstfahrende Erntemaschine oder als Traktor ausgeführt sein. Bei der Vorrichtung 3 kann es sich um ein Vorsatzgerät oder ein Anbaugerät handeln, welches von einer Aufnahmevorrichtung der Arbeitsmaschine 2, beispielsweise einem Einzugskanal oder einem Dreipunktkraftheber, aufgenommen und an der Arbeitsmaschine 2 angeordnet ist. Die Vorrichtung 3 kann auch als gezogene Erntemaschine, beispielsweise eine Ballenpresse, oder ein Anhänger ausgeführt sein, die an eine Kopplungsvorrichtung der Arbeitsmaschine 2 angekoppelt ist. Die Kopplungsvorrichtung der Arbeitsmaschine 2 kann beispielsweise als Dreipunktraftheber oder Zugmaul ausgeführt sein.

Das Steuerungssystem 1 umfasst eine Steuereinheit 4 mit einer Speichereinheit 5 zum abrufbaren Hinterlegen von Daten sowie eine Recheneinheit 6, welche dazu eingerichtet ist, die in der Speichereinheit 5 hinterlegten Daten zu verarbeiten und daraus Lenksignale LS zur Ansteuerung einer Lenkeinrichtung 8 der Arbeitsmaschine 2 zu generieren. Weiterhin weist die Steuereinheit 4 eine Eingabe-Ausgabeeinheit 7 auf.

Das Steuerungssystem 1 umfasst zumindest eine Sensoranordnung 10a, insbesondere mehrere Sensoranordnungen 10b, 10c, 10d, 10e, welche dazu eingerichtet ist bzw. sind, Daten der Arbeitsmaschine 1 und/oder der daran angeordneten und/oder von dieser gezogenen Vorrichtung 3 bereitzustellen. Die von den Sensoranordnungen 10b, 10c, 10d, 10e bereitgestellten Daten umfassen, in Abhängigkeit von der Ausgestaltung und der Funktionsweise der Sensoranordnungen 10b, 10c, 10d, 10e, unter anderem Messsignale, Bilddaten und dergleichen mehr.

Eine Sensoranordnung 10a der Arbeitsmaschine 2 kann einem Antriebsstrang 9 der Arbeitsmaschine 2, der unter anderem aus einem Antriebsmotor und einem Getriebe besteht, zugeordnet sein. Mittels der dem Antriebsstrang 9 zugeordneten Sensoranordnung 10a können Drehzahl und/oder Drehmoment sowie gewählter Schaltgang erfasst werden, so dass sich ein Beschleunigen und Verzögern der Arbeitsmaschine 2 sowie deren Fahrtrichtung bestimmen lässt. Zudem kann eine nicht dargestellte Sensoranordnung vorgesehen sein, welche die Pedalstellung von Beschleunigungs- und Verzögerungspedalen erfasst.

Eine weitere Sensoranordnung 10b kann der Lenkeinrichtung 8 zugeordnet sein, um einen Lenkwinkel zu erfassen. Alternativ kann die Sensoranordnung 10b einer Lenkachse der Arbeitsmaschine 2 zugeordnet sein, welche von der Lenkeinrichtung 8 zur Ausführung von Lenkbewegungen angesteuert wird.

Als eine weitere Sensoranordnung 10c kann zumindest eine optische Sensoreinrichtung an der Arbeitsmaschine 1 angeordnet sein, welche zur Umfelderkennung eingerichtet ist. Bevorzugt sind zumindest zwei als optische Sensoreinrichtungen ausgeführte Sensoranordnungen 10c vorgesehen, welche die Umgebung der Arbeitsmaschine 2 zumindest in Vorwärtsfahrtrichtung und in Rückwärtsfahrtrichtung erfassen können. Hierzu kann eine Sensoranordnung 10c frontseitig und eine weitere Sensoranordnung 10c im Heckbereich der Arbeitsmaschine 2 angeordnet sein. Weiterhin können als optische Sensoreinrichtungen ausgeführte Sensoranordnungen 10c vorgesehen sein, welche das seitliche Umfeld der Arbeitsmaschine 2 und der daran angeordneten und/oder gezogenen Vorrichtung 3 erfassen.

Zumindest an der Arbeitsmaschine 2 ist eine einen Positionsortungssensor umfassende Sensoranordnung 10d angeordnet, welche das Aufzeichnen und Abspeichern einer zurückgelegten Wegstrecke anhand einer Vielzahl von Wegpunkten ermöglicht.

Die im rückwärtigen Bereich der Arbeitsmaschine 2 angeordnete, alsoptische Sensoreinrichtung ausgeführte Sensoranordnung 10c kann auch der Erfassung eines Einschlagwinkels einer Zugdeichsel 3a der Vorrichtung 3 dienen. Alternativ oder zusätzlich kann eine als Knickwinkelsensor oder Einschlagwinkelsensor ausgeführte Sensoranordnung 10e der Zugdeichsel 3a zugeordnet sein. Durch die im rückwärtigen Bereich der Arbeitsmaschine 2 angeordnete Sensoranordnung 10c lassen sich Reaktionen der Vorrichtung 3 auf von der Arbeitsmaschine 2 übertragene Lenkbewegungen erfassen.

Die von den Sensoranordnungen 10a, ..., 10e bereitgestellten Signale werden der Steuereinheit 4 zur Verarbeitung durch in der Speichereinheit 5 hinterlegten und von der Recheneinheit 6 ausgeführten Algorithmen zugeführt.

Heutige landwirtschaftliche Arbeitsmaschinen 2 werden immer größer und sind somit aufgrund ihrer Abmessungen auch immer schwerer von der Bedienperson zu überblicken. Eine als großes Anbaugerät ausgeführte Vorrichtung 3, beispielsweise eine Egge, Spritze, Pflug etc., mit deutlicher Auslage verschärft diese Situation weiter. Die Bedienpersonen sind zwar in der Lage, die Arbeitsmaschine 2 mit der daran angeordneten Vorrichtung 3 unfallfrei zu steuern, dieses erfordert aber in jeder kritischen Situation, beispielsweise beim Rückwärtsfahren, aufgrund einer erforderlichen besonders erhöhten Aufmerksamkeit hohe Anstrengungen. Kritische Situationen sind unter anderem das Einparken bzw. Abstellen der Arbeitsmaschine 2 und/oder der Vorrichtung 3, das Ansteuern eines Anschlusses zur Aufnahme von Betriebs- oder Hilfsstoffen, das Aufnehmen oder Absetzen der als Anbaugerät ausgeführten Vorrichtung 3 oder das Umfahren von Hindernissen, insbesondere unter erschwerten Bedingungen wie räumlicher Enge.

Um die Gefahr von Unfällen während des Navigierens und Rangierens möglichst gering zu halten, soll die Bedienperson der Arbeitsmaschine 2 in wiederkehrenden ähnlichen schwierigen Situationen, insbesondere beim Navigieren und Rangieren, von dem Steuerungssystem 1 bei der Fahrzeugführung unterstützt werden.

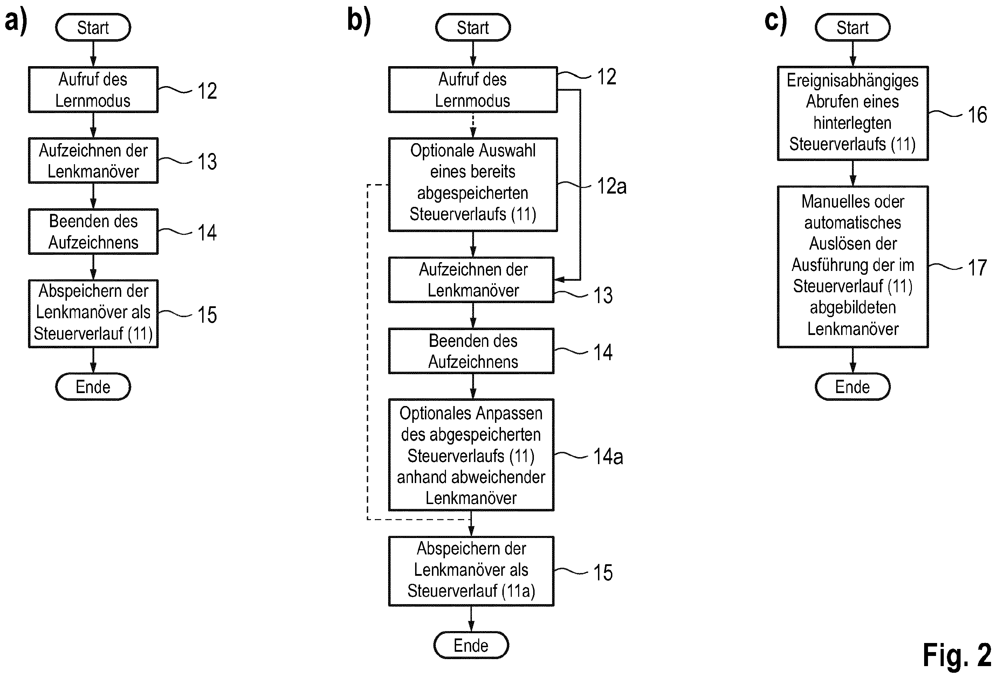

Die Darstellung in Fig. 2a) zeigt schematisch ein Flussdiagramm eines exemplarischen Ablaufs eines Lernmodus, in Fig. 2 b) zeigt die Darstellung schematisch ein Flussdiagramm eines exemplarischen Ablaufs eines erweiterten Lernmodus und in Fig. 2c) zeigt die Darstellung schematisch ein Flussdiagramm eines exemplarischen Ablaufs einer Ausführung eines in einem Lernmodus aufgezeichneten und in der Speichereinheit 5 hinterlegten Steuerverlaufs 11.

Mit Bezug auf Fig. 2a) wird zunächst die Ausführung des Lernmodus erläutert. Mittels der Eingabe-Ausgabeeinheit 7 kann die Bedienperson der Arbeitsmaschine 2 die Ausführung des Lernmodus manuell initiieren. Im ersten Verfahrensschritt 12 wird der Lernmodus von der Bedienperson aufgerufen.

Im nachfolgenden Verfahrensschritt 13 werden alle von der Bedienperson während des aktiven Lernmodus ausgeführten Lenkmanöver automatisch aufgezeichnet. Hierzu werden die von den vorhandenen Sensoranordnungen 10a, ..., 10e bereitgestellten Signalen von der Recheneinheit 6 ausgewertet, um einen reproduzierbaren Steuerverlauf 11 zu generieren, der alle während des Lernmodus durch die Bedienperson ausgeführten Handlungen, soweit diese das Lenken und Betätigen, d.h. zur Ansteuerung von Aktoren, der Arbeitsmaschine 2 bzw. der Vorrichtung 3 betreffen, umfasst. Das Steuerungssystem 1 ist hierbei dazu eingerichtet, die Daten der zumindest einen Sensoranordnung 10a, ..., 10e in einen zeitlichen Zusammenhang mit dem durch die Bedienperson manuell ausgeführten Lenkmanöver zu setzen und auszuwerten.

Im Verfahrensschritt 14 erfolgt das Beenden des Aufzeichnens der durchgeführten Lenkmanöver und der mit diesen verbundenen Daten. Das Beenden des Aufzeichnens kann durch eine Eingabe der Bedienperson mittels der Eingabe-Ausgabeeinheit 7 erfolgen. Die Bedienperson bestätigt damit zugleich den von der Arbeitsmaschine 2 zurückgelegten Weg. Alternativ kann das Beenden des Aufzeichnens anhand von Daten detektiert werden, die durch eine der Sensoranordnungen 10a, ..., 10e bereitgestellt werden. Beispielsweise kann das Erreichen eines eingegebenen Endpunktes bzw. Zielpunktes durch die den Positionsortungssensor umfassende Sensoranordnung 10d bestimmt werden, um das Beenden des Aufzeichnens zu triggern. Eine weitere Option kann das Abschalten des Antriebsmotors der Arbeitsmaschine 2 sein, welche das automatische Aufzeichnen beendet.

Im nachfolgen Verfahrensschritt 15 erfolgt das Abspeichern der während des Navigierens und Rangierens durchgeführten Lenkmanöver und Betätigungen in der Speichereinheit 5 als ein Steuerverlauf 11.

In Fig. 2b) ist schematisch und exemplarisch das Flussdiagramm eines erweiterten Lernmodus dargestellt. Nach dem manuellen Aufrufen des Lernmodus im ersten Verfahrensschritt 12 kann optional zu einem Verfahrensschritt 12a übergegangen werden, in welchem die Bedienperson einen bereits abgespeicherten Steuerverlauf 11 auswählt. Der Steuerverlauf 11 ist zu einem früheren Zeitpunkt für die gleiche Betriebssituation bereits aufgezeichnet worden. Im Anschluss werden die weiter oben bereits erläuterten Verfahrensschritte 13 und 14 durchlaufen.

An den Verfahrensschritt 14 schließt sich ein weiterer optionaler Verfahrensschritt 14a an, der in Abhängigkeit von der Ausführung des Verfahrensschritts 12 ausgeführt wird. Im Verfahrensschritt 14a erfolgt anhand der Aufzeichnung abweichender Lenkmanöver eine Anpassung der korrespondierenden Lenkmanöver, welche in dem vorherigen Steuerverlauf 11 abgespeichert sind. Wird durch einen Abgleich der in dem Steuerverlauf 11 abgespeicherten Lenkmanöver mit den aktuell neu aufgezeichneten Lenkmanövern ein Unterschied festgestellt, welcher eine Verbesserung im Sinne einer Optimierung darstellt, beispielsweise eine Reduzierung von Lenkbewegungen, eine Verkürzung der zurückzulegenden Wegstrecke, darstellt, wird ein angepasster Steuerverlauf 11a anstelle des Steuerverlaufs 11 abgespeichert. Auch das Auftreten einer Veränderung, beispielsweise wegen einer Änderung der Wegführung aufgrund eines neu hinzugekommenen Hindernisses oder dergleichen, welche eine zumindest teilweise Anpassung von Lenkmanövern erforderlich werden lässt, führt dazu, dass ein angepasster Steuerverlauf 11a anstelle des Steuerverlaufs 11 abgespeichert wird.

Während der Ablauf gemäß Fig. 2a) einer direkten Imitation der während des Lernmodus durch die Bedienperson ausgeführten Fahrmanöver entspricht, ermöglicht der erweiterte Ablauf gemäß Fig. 2 b) ein wiederholtes Ausführen und Aufzeichnen der gleichen Betriebssituation in mehreren aufeinanderfolgenden Lernmodi, um diese durch die Bedienperson zu trainieren. Letzteres ermöglicht es, dass die Arbeitsmaschine 2 ein Modell einer Situationsauflösung erlernt und dieses anhand der einzelnen wiederholten Trainingsabläufen anpasst.

Darüber hinaus ist es denkbar, dass das Steuerungssystem 1 dazu eingerichtet sein kann, einen Anfangszustand der Arbeitsmaschine 2 einschließlich einer Startposition und einen eingenommenen Endzustand der Arbeitsmaschine 2 einschließlich einer Endposition relativ zum Anfangszustand und zur Anfangsposition zu bestimmen. Der Weg, um vom Anfangszustand und der Startposition in den Endzustand und die Endposition zu kommen, kann durch die Arbeitsmaschine 2 automatisch durch Planungsalgorithmen ermittelt werden. So kann zum Beispiel beim Einparken ein optimaler Weg zur Zielposition geplant werden. Beispielhaft kann die Arbeitsmaschine 2 mittels eines durch den Planungsalgorithmus bestimmten Steuerverlauf 11 aus einer Parkposition der Arbeitsmaschine 2 als Startpunkt, in der die Arbeitsmaschine 2 als Anfangszustand ohne Vorrichtung 3 ist, heraus zu einem beanstandeten Endpunkt überführt werden, der dem Standort einer aufzunehmenden oder anzukoppelnden Vorrichtung 3 entspricht, wobei die aufgenommene oder angekoppelte Vorrichtung 3 den Endzustand darstellt.

Mit Bezug auf Fig. 2c) wird das Abrufen eines hinterlegten Steuerverlaufs 11 sowie das Auslösen der Ausführung des Steuerverlaufs 11 erläutert.

Im Schritt 16 wird ein hinterlegter Steuerverlauf 11 ereignisabhängig abgerufen. Ein Ereignis kann ein manuelles Abrufen des hinterlegten Steuerverlaufs 11 sein. Alternativ kann ein hinterlegter Steuerverlauf 11 abgerufen werden, wenn mittels der Eingabe-Ausgabeeinheit 7 ein spezifischer Startpunkt und Endpunkt von der Bedienperson eingegeben werden, die diesem Steuerverlauf 11 im Zuge eines in der Vergangenheit durchgeführten Lernmodus zugeordnet sind. Ein ereignisabhängiges Abrufen kann auch auf das automatisierte Erkennen einer aktuellen Betriebssituation zurückzuführen sein.

So kann das Steuerungssystem 1 dazu eingerichtet sein, in Abhängigkeit von einer Auswertung der von der zumindest einen optischen Sensoreinrichtung bereitgestellten Bilddaten eine bevorstehende Betriebssituation zu erkennen, für die das Lenk- und Fahrverhalten während eines Lernmodus bereits aufgezeichnet und abgespeichert wurde. Eine Betriebssituation kann beispielsweise das Verbringen der Arbeitsmaschine 2 in eine Parkposition auf einer Hofstätte sein. Eine Betriebssituation kann weiterhin das Aufnehmen oder Ankoppeln der Vorrichtung 3 sein, wenn die Arbeitsmaschine 2 auf eine Vorrichtung zufährt und die Vorrichtung 3 als solche erkannt wird, für die zumindest ein korrespondierender Steuerverlauf 11 in der Speichereinheit 5 hinterlegt ist.

Das Erkennen einer Betriebssituation ermöglicht es darüber hinaus, dass durch das Steuerungssystem 1 zumindest ein Vorschlag für einen Steuerverlauf 11 auf der Eingabe-Ausgabeeinheit 7 ausgegeben werden kann, welche Lenkmanöver mittels eines ausgeführten Lenkmodus in einer vergleichbaren oder identischen Betriebssituation bereits aufgezeichnet worden sind. Das Erkennen einer Betriebssituation kann zudem unabhängig von der zumindest einen optischen Sensoreinrichtung als Sensoranordnung 10c und/oder unterstützt durch den Positionsortungssensor der Sensoranordnung 10d an der Arbeitsmaschine 2 erfolgen. Beispielsweise kann eine bestehende Parkposition der Arbeitsmaschine 2 erkannt werden, welche bei Inbetriebnahme der Arbeitsmaschine 2 verlassen werden soll.

Gemäß einer Weiterbildung kann das Steuerungssystem 1 dazu eingerichtet sein, das Abspeichern des während des Lernmodus durchgeführten Lenk- und Fahrverhaltens in Abhängigkeit von der Art bzw. Gattung und/oder dem Typ der an der Arbeitsmaschine 2 angeordneten und/oder gezogenen Vorrichtung 3 vorzunehmen. Bei der Art kann zwischen gezogenen Vorrichtungen 3, wie einem Transportwagen oder eine Ballenpresse, und an der Arbeitsmaschine 2 angeordneten und getragenen Vorrichtungen 3, wie einem Bodenbearbeitungsgerät, sowie deren Einsatzzweck unterschieden werden. Die Kategorisierung nach unterschiedlichen Typen kann beispielsweise auf der Basis von Herstellern sowie Modellbezeichnungen erfolgen. Zusätzlich kann das detektierte Umfeld als weiteres Kriterium herangezogen werden. Hierzu kommen insbesondere unterschiedliche Standorte auf der Hofstätte infrage.

Das Steuerungssystem 1 ist dazu eingerichtet ist, einen aus der Speichereinheit 5 abgerufenen Steuerverlauf 11 in umgekehrter Reihenfolge auszuführen. Beispielsweise kann der Steuerverlauf 11 eines aufgezeichneten Einparkvorgangs in umgekehrter Reihenfolge ausgeführt werden, so dass die Arbeitsmaschine 2 gemäß dem ausgewählten Steuerverlauf 11 selbstständig das Ausparken ausführt.

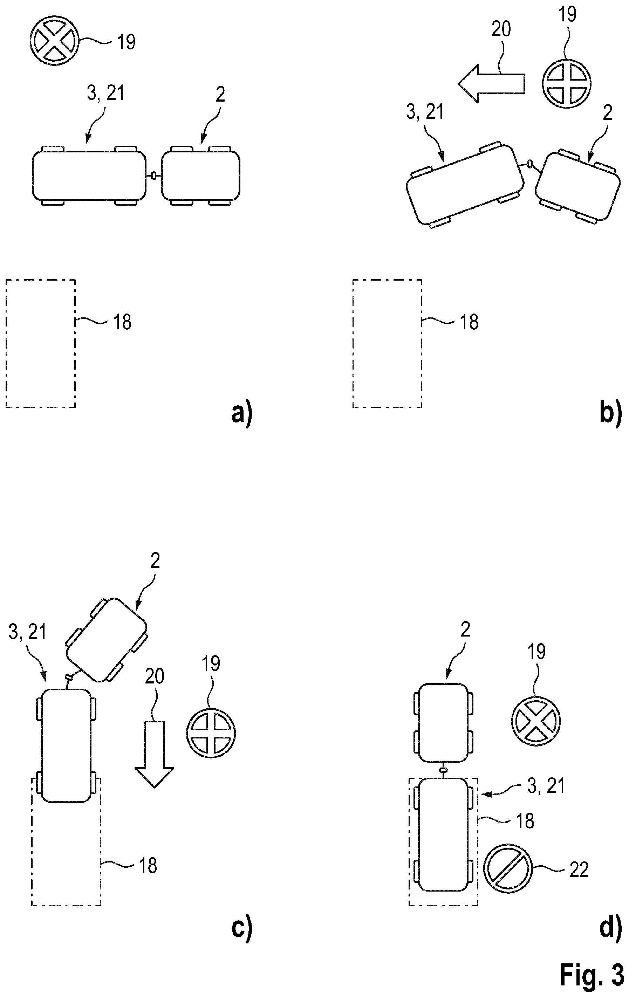

In Fig. 3 ist eine schematische Darstellung eines Ablaufs eines Einparkvorganges der landwirtschaftlichen Arbeitsmaschine 2 mit einem daran angekoppelten Transportwagen 21 als Vorrichtung 3 dargestellt.

Fig. 3 a) zeigt die Arbeitsmaschine 2 und den Transportwagen 21 an ihrem Startpunkt. Eine Lenkradstellung 19 der als Lenkrad ausgeführten Lenkeinrichtung 8 ist als Ausgangsstellung gezeigt, welche einer Geradeausfahrt entspricht. Ein Parkbereich 18 bildet den am Ende des Einparkvorganges beispielhaft zu erreichenden Endpunkt. Der Parkbereich 18 kann eine freie ebene Fläche sein oder durch seitliche und/oder eine rückwärtige Begrenzung, z.B. Wände oder andere Vorrichtungen 3, begrenzt sein, wodurch das Manövrieren und Rangieren für die Bedienperson besonders aufwendig wird. Um den Einparkvorgang zu einem späteren Zeitpunkt automatisch durch das Steuerungssystem 1 erneut ausführen zu lassen, startet die Bedienperson den Lernmodus gemäß dem Verfahrensschritt 12 der Fig. 2 a) oder 2 b). Anschließend beginnt die Bedienperson mit der Durchführung der erforderlichen Lenkmanöver, die, wie weiter oben bereits beschrieben, im Verfahrensschritt 13 aufgezeichnet werden.

In Fig. 3 b) ist neben der geänderten Lenkradstellung 19, welche eine Kurvenfahrt andeutet, zusätzlich eine Fahrtrichtung, hier eine Rückwärtsfahrtrichtung, und eine Beschleunigungsrichtung durch einen Pfeil 20 veranschaulicht. Die in Fig. 3b) gezeigte Lenkradstellung 19 weicht von der in Fig. 3a) gezeigten ab und wird entsprechend dem Verfahrensschritt 13 bei der Ausführung des Lernmodus aufgezeichnet.

In Fig. 3 c) ist der Transportwagen 21 unmittelbar vor dem Erreichen des Parkbereichs 18 dargestellt.

In Fig. 3 d) haben die Arbeitsmaschine 2 und der Transportwagen 21 ihren Endzustand erreicht. Der Transportwagen 21 befindet sich an seinem Endpunkt im Parkbereich 18. Mit dem Symbol 22 wird der Stillstand angedeutet. Die angedeutete Lenkradstellung 19 entspricht wieder der Geradeausfahrt. Mit dem Erreichen des Endpunktes wird die Aufzeichnung gemäß dem Verfahrensschritt 14 beendet. Im Schritt 15 werden die im Zusammenhang mit dem Erreichen des Endpunktes durchgeführten Lenkmanöver als Steuerverlauf 11 abgespeichert. Für das Ausparken und ein späteres erneutes Einparken kann die Bedienperson den Steuerverlauf 11 beispielsweise manuell abrufen und durch das Steuerungssystem 1 für das Ausparken, dann in umgekehrter Reihenfolge, oder das neuerliche Einparken automatisch ausführen lassen.

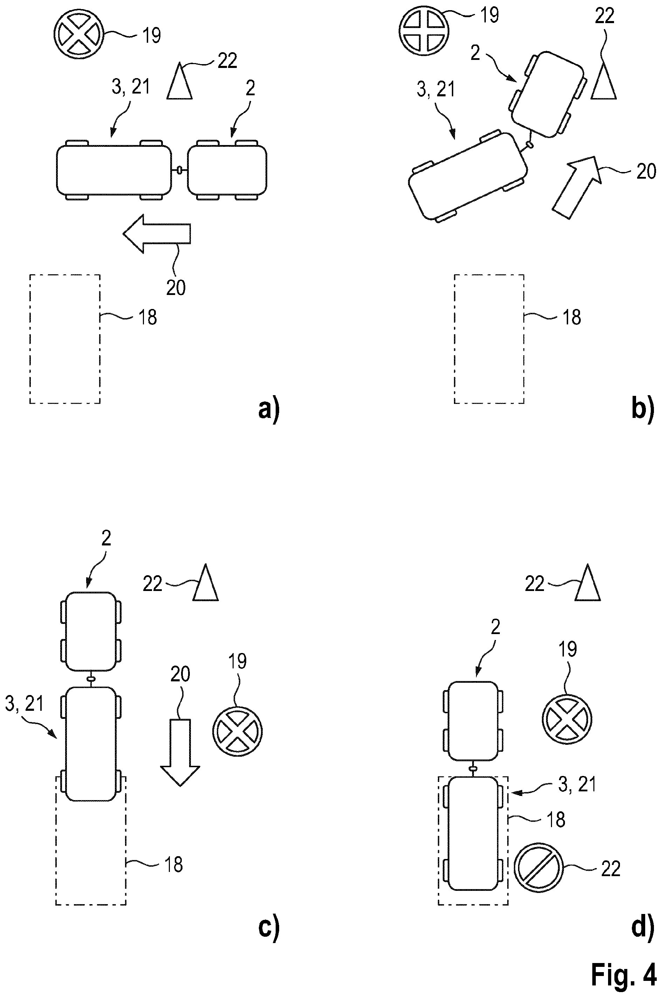

In den Fig. 4 a) bis 4 d) ist der anhand der Fig. 3 a) bis d) bereits erläuterte Ablauf des Rückwärtseinparkens des Transportwagens 21 beschrieben. Die erforderlichen auszuführenden Lenkmanöver weichen wegen eines Hindernisses 22 im Rangierbereich des Parkbereich 18 ab. So müssen die Arbeitsmaschine 2 und der Transportwagen 21 zunächst soweit zurücksetzen, dass die Arbeitsmaschine 2, wie In Fig. 4 b) veranschaulicht, vor dem Hindernis 22 einschwenken kann, um sich und den Transportwagen 21 senkrecht zum Parkbereich 18 auszurichten. Die Lenkmanöver gemäß den Fig. 4 c) und Fig. 4 d) entsprechen denen gemäß der Fig. 3 c) und Fig. 3 d). Während des Lernmodus werden bei der dargestellten Betriebssituation mit dem Hindernis 22 dessen Lage und die zusätzlich notwendigen, von der Bedienperson ausgeführten Lenkmanöver während des Lernmodus aufgezeichnet und in einem Steuerverlauf 11 abgespeichert.

Darüber hinaus kann vorgesehen sein, alle während des Lernmodus im zeitlichen und/oder räumlichen Zusammenhang stehenden, von der Bedienperson initiierten und von der Arbeitsmaschine 2 ausgeführten Abläufe, die über das Ausführen von Lenkmanövern hinausgehen, zu erfassen und aufzuzeichnen. Das Steuerungssystem 1 kann dazu eingerichtet sein, diese Abläufe dem Steuerverlauf 11, 11a chronologisch zuzuordnen. Von der Bedienperson initiierte und von der Arbeitsmaschine 1 ausgeführte Abläufe umfassen insbesondere das Ansteuern von Aktoren der Arbeitsmaschine 2 während des Lernmodus, welche der Handhabung von an der Arbeitsmaschine 2 angeordneten Vorrichtungen dienen. Aktoren der Arbeitsmaschine 2 können beispielsweise einzelne Hydraulikzylinder sein, mit welchen ein Front- oder Heckhubwerk oder ein Einzugskanal betätigt werden, oder ein Hydrauliksystem, um beispielsweise ein Anbaugerät an- oder abzukoppeln oder ein Vorsatzgerät aufzunehmen oder abzusetzen.

### Bezugszeichenliste

- 1: Steuerungssystem
- 2: Arbeitsmaschine
- 3: Vorrichtung
- 3a: Zugdeichsel
- 4: Steuereinheit
- 5: Speichereinheit
- 6: Recheneinheit
- 7: Eingabe-Ausgabeeinheit
- 8: Lenkeinrichtung
- 9: Antriebsstrang
- 10a: Sensoranordnung
- 10b: Sensoranordnung
- 10c: Sensoranordnung
- 10d: Sensoranordnung
- 10e: Sensoranordnung
- 11: Steuerverlauf
- 11a: Steuerverlauf
- 12: Verfahrensschritt
- 12a: Verfahrensschritt
- 13: Verfahrensschritt
- 14: Verfahrensschritt
- 14a: Verfahrensschritt
- 15: Verfahrensschritt
- 16: Verfahrensschritt
- 17: Verfahrensschritt
- 18: Parkbereich
- 19: Lenkradstellung
- 20: Pfeil "Fahrt- und Beschleunigungsrichtung"
- 21: Transportwagen
- 22: Symbol "Stillstand"

## Patentansprüche

1. Steuerungssystem (1) zum Lenken einer landwirtschaftlichen Arbeitsmaschine (2) mit zumindest einer daran angeordneten und/oder von dieser gezogenen Vorrichtung (3), wobei das Steuerungssystem (1) eine Steuereinheit (4) mit einer Speichereinheit (5) zum abrufbaren Hinterlegen von Daten sowie eine Recheneinheit (6) umfasst, welche dazu eingerichtet ist, die in der Speichereinheit (5) hinterlegten Daten zu verarbeiten und daraus Lenksignale (LS) zur Ansteuerung einer Lenkeinrichtung (8) der Arbeitsmaschine (2) zu generieren, wobei
das Steuerungssystem (1) dazu eingerichtet ist, einen Lernmodus auszuführen, um in dem Lernmodus Daten eines Lenk- und Fahrverhaltens, welches auf zumindest ein durch eine Bedienperson manuell gesteuertes Lenkmanöver zurückgeht, zu erfassen und als zumindest einen ausführbaren Steuerverlauf (11, 11a) in der Speichereinheit (5) abrufbar zu hinterlegen, **dadurch gekennzeichnet, dass** der Lernmodus ein manuell initiierter Lernmodus ist und dass das Steuerungssystem (1) dazu eingerichtet ist, anhand einer Bestimmung eines Startpunktes und eines Endpunktes den korrespondierenden, in der Speichereinheit (5) hinterlegten Steuerverlauf (11, 11a) zu ermitteln, welcher in einem vorangehend ausgeführten Lernmodus zwischen diesem Startpunkt und diesem Endpunkt ausgeführte Lenkmanöver umfasst, und auszuführen.

2. Steuerungssystem (1) nach Anspruch 1, **dadurch gekennzeichnet, dass** das Steuerungssystem (1) dazu eingerichtet ist, die in der Speichereinheit (5) hinterlegten ausführbaren Steuerverläufe (11, 11a) zu einem späteren Zeitpunkt ereignisabhängig abzurufen.

3. Steuerungssystem (1) nach Anspruch 1 oder 2, **dadurch gekennzeichnet, dass** das Steuerungssystem (1) dazu eingerichtet ist, einen ausführbaren Steuerverlauf (11, 11a) manuell durch einen Abruf durch die Bedienperson auszulösen und/oder automatisch in Abhängigkeit von einer durch das Steuerungssystem (1) erkannten Betriebssituation der landwirtschaftlichen Arbeitsmaschine (2).

4. Steuerungssystem (1) nach einem der Ansprüche 1 bis 3, **dadurch gekennzeichnet, dass** das Steuerungssystem (1) dazu eingerichtet ist, Steuerverläufe (11, 11a), die während wiederholt ausgeführter Lernmodi zwischen demselben Startpunkt und demselben Endpunkt aufgezeichnet wurden, miteinander zu vergleichen und zu adaptieren.

5. Steuerungssystem (1) nach einem der Ansprüche 1 bis 4, **dadurch gekennzeichnet, dass** das Steuerungssystem (1) zumindest eine Sensoranordnung (10a, 10b, 10c, 10d, 10e), insbesondere mehrere Sensoranordnungen(10a, 10b, 10c, 10d, 10e), umfasst, welche dazu eingerichtet ist, Daten bereitzustellen, aus denen sich das Lenkund Fahrverhalten während des Lernmodus ermitteln lässt.

6. Steuerungssystem (1) nach Anspruch 5, **dadurch gekennzeichnet, dass** das Steuerungssystem (1) dazu eingerichtet ist, die Daten der zumindest einen Sensoranordnung(10a, 10b, 10c, 10d, 10e) in einen zeitlichen Zusammenhang mit dem durch die Bedienperson manuell ausgeführten Lenkmanöver zu setzen auszuwerten und im abzuspeichernden Steuerverlauf (11, 11a) zu hinterlegen.

7. Steuerungssystem (1) nach einem der vorangehenden Ansprüche, **dadurch gekennzeichnet, dass** das Steuerungssystem (1) dazu eingerichtet ist, das Abspeichern des während des Lernmodus durchgeführten Lenk- und Fahrverhaltens in Abhängigkeit von der Art und/oder dem Typ der an der Arbeitsmaschine (2) angeordneten und/oder gezogenen Vorrichtung (3) vorzunehmen

8. Steuerungssystem (1) nach einem der Ansprüche 6 oder 7, **dadurch gekennzeichnet, dass** als eine Sensoranordnung (10a, 10b, 10c, 10d, 10e) zumindest eine optische Sensoreinrichtung (10c) an der Arbeitsmaschine (2) angeordnet ist, welche zur Umfelderkennung eingerichtet ist.

9. Steuerungssystem (1) nach Anspruch 8, **dadurch gekennzeichnet, dass** das Steuerungssystem (1) dazu eingerichtet ist, in Abhängigkeit von einer Auswertung der von der zumindest einen optischen Sensoreinrichtung (10c) bereitgestellten Bilddaten eine bevorstehende Betriebssituation zu erkennen, für die das Lenk- und Fahrverhalten während eines Lernmodus bereits aufgezeichnet und abgespeichert wurde.

10. Steuerungssystem (1) nach Anspruch 9, **dadurch gekennzeichnet, dass** das Steuerungssystem (1) dazu eingerichtet ist, in Abhängigkeit von der erkannten bevorstehenden Betriebssituation zumindest einen Vorschlag zu unterbreiten, welches Lenkmanöver anhand der in der Speichereinheit (5) hinterlegten Steuerverläufe (11, 11a) für Lenk- und Fahrverhalten ausführbar ist.

11. Steuerungssystem (1) nach einem der vorangehenden Ansprüche, **dadurch gekennzeichnet, dass** das Steuerungssystem (1) dazu eingerichtet ist, einen aus der Speichereinheit (5) abgerufenen Steuerverlauf (11, 11a) in umgekehrter Reihenfolge auszuführen.

12. Verfahren zum Betreiben eines Steuerungssystems (1) zum Lenken einer landwirtschaftlichen Arbeitsmaschine (2) mit zumindest einer daran angeordneten und/oder von dieser gezogenen Vorrichtung (3), wobei das Steuerungssystem (1) eine Steuereinheit (4), eine Speichereinheit (5) zum abrufbaren Hinterlegen von Daten umfasst sowie eine Recheneinheit (6), durch die in der Speichereinheit (5) hinterlegte Daten verarbeitet werden, um daraus Lenksignale (LS) zu generieren, mit denen eine Lenkeinrichtung (8) der Arbeitsmaschine (2) angesteuert wird, **dadurch gekennzeichnet, dass** ein manuell initiierter Lernmodus ausgeführt wird, in welchem Daten eines Lenk- und Fahrverhaltens, welches auf zumindest ein durch eine Bedienperson manuell gesteuertes Lenkmanöver zurückgeht, erfasst und als ausführbarer Steuerverlauf (11, 11a) in der Speichereinheit (5) abrufbar hinterlegt werden, und dass anhand einer Bestimmung eines Startpunktes und eines Endpunktes der korrespondierende, in der Speichereinheit (5) hinterlegte Steuerverlauf (11, 11a), welcher in einem vorangehend ausgeführten Lernmodus zwischen diesem Startpunkt und diesem Endpunkt ausgeführte Lenkmanöver umfasst, ermittelt und ausgeführt wird.

13. Verfahren nach Anspruch 12, **dadurch gekennzeichnet, dass** in Abhängigkeit von einer erkannten Betriebssituation der landwirtschaftlichen Arbeitsmaschine (2) oder einem manuellen Auslösen durch die Bedienperson ein in der Speichereinheit (5) hinterlegter ausführbarer Steuerverlauf (11, 11a) abgerufen und von dem Steuerungssystem (1) zum Lenken der landwirtschaftlichen Arbeitsmaschine (2) ausgeführt wird.

14. Verfahren nach Anspruch 12 oder 13, **dadurch gekennzeichnet, dass** als Fahrverhalten alle während eines aufzuzeichnenden Lenkmanövers von der Bedienperson initiierten und von der Arbeitsmaschine (2) ausgeführten Abläufe, die über das Lenken hinausgehen, erfasst und dem Steuerverlauf (11, 11a) zugeordnet werden.

## Claims

1. Control system (1) for steering an agricultural work machine (2) having at least one apparatus (3) arranged thereon and/or pulled thereby, wherein the control system (1) comprises a control unit (4) with a storage unit (5) for retrievably storing data and a computing unit (6) which is configured to process the data stored in the storage unit (5) and to generate steering signals (LS) therefrom for controlling a steering device (8) of the work machine (2), wherein
the control system (1) is configured to execute a learning mode in order to record in the learning mode data relating to a steering and driving behaviour which goes back to at least one steering manoeuvre manually controlled by an operator, and to retrievably store said data as at least one executable control profile (11, 11a) in the storage unit (5), **characterized in that** the learning mode is a manually initiated learning mode, and **in that** the control system (1) is configured to determine the corresponding control profile (11, 11a) stored in the storage unit (5) based on a determination of a starting point and an end point, which control profile comprises steering manoeuvres performed in a previously executed learning mode between that starting point and that end point, and to execute said control profile.

2. Control system (1) according to Claim 1, **characterized in that** the control system (1) is designed to retrieve the executable control profiles (11, 11a) stored in the storage unit (5) at a later time depending on the event.

3. Control system (1) according to Claim 1 or 2, **characterized in that** the control system (1) is configured to trigger an executable control profile (11, 11a) manually by a retrieval by the operator and/or automatically on the basis of an operating situation of the agricultural work machine (2) that is detected by the control system (1).

4. Control system (1) according to one of Claims 1 to 3, **characterized in that** the control system (1) is configured to compare and adapt control profiles (11, 11a) which were recorded during repeatedly executed learning modes between the same starting point and the same end point.

5. Control system (1) according to one of Claims 1 to 4, **characterized in that** the control system (1) comprises at least one sensor arrangement (10a, 10b, 10c, 10d, 10e), in particular a plurality of sensor arrangements (10a, 10b, 10c, 10d, 10e), configured to provide data that can be used to determine the steering and driving behaviour during the learning mode.

6. Control system (1) according to Claim 5, **characterized in that** the control system (1) is configured to put the data from the at least one sensor arrangement (10a, 10b, 10c, 10d, 10e) in a temporal relationship with the steering manoeuvre manually performed by the operator, to evaluate them and to store them in the control profile (11, 11a) to be stored.

7. Control system (1) according to one of the preceding claims, **characterized in that** the control system (1) is configured to store the steering and driving behaviour carried out during the learning mode on the basis of the kind and/or type of apparatus (3) arranged on the work machine (2) and/or pulled.

8. Control system (1) according to either of Claims 6 and 7, **characterized in that**, as a sensor arrangement (10a, 10b, 10c, 10d, 10e), at least one optical sensor device (10c) is arranged on the work machine (2) and is configured to detect the environment.

9. Control system (1) according to Claim 8, **characterized in that** the control system (1) is configured to recognize an impending operating situation, for which the steering and driving behaviour has already been recorded and stored during a learning mode, on the basis of an evaluation of the image data provided by the at least one optical sensor device (10c).

10. Control system (1) according to Claim 9, **characterized in that** the control system (1) is configured to present at least one suggestion, on the basis of the recognized impending operating situation, as regards which steering manoeuvre can be performed on the basis of the control profiles (11, 11a) for steering and driving behaviours stored in the storage unit (5).

11. Control system (1) according to one of the preceding claims, **characterized in that** the control system (1) is configured to execute a control profile (11, 11a) retrieved from the storage unit (5) in reverse order.

12. Method for operating a control system (1) for steering an agricultural work machine (2) having at least one apparatus (3) arranged thereon and/or pulled thereby, wherein the control system (1) comprises a control unit (4), a storage unit (5) for retrievably storing data and a computing unit (6) that is used to process data stored in the storage unit (5) in order to generate steering signals (LS) therefrom, with which a steering device (8) of the work machine (2) is controlled, **characterized in that** that a manually initiated learning mode is executed in which data relating to a steering and driving behaviour, which goes back to at least one steering manoeuvre manually controlled by an operator, are recorded and retrievably stored as an executable control profile (11, 11a) in the storage unit (5), and **in that** the corresponding control profile (11, 11a) stored in the storage unit (5) is determined based on a determination of a starting point and an end point, which control profile comprises steering manoeuvres performed in a previously executed learning mode between that starting point and that end point, and is executed.

13. Method according to Claim 12, **characterized in that**, on the basis of a recognized operating situation of the agricultural work machine (2) or manual triggering by the operator, an executable control profile (11, 11a) stored in the storage unit (5) is retrieved and is executed by the control system (1) for steering the agricultural work machine (2).

14. Method according to Claim 12 or 13, **characterized in that** all processes initiated by the operator during a steering manoeuvre to be recorded and carried out by the work machine (2), which go beyond steering, are recorded as driving behaviour and assigned to the control profile (11, 11a).

## Revendications

1. Système de commande (1) destiné à diriger une machine de travail agricole (2) dotée d'au moins un dispositif (3) installé sur celle-ci et/ou tracté par celle-ci, le système de commande (1) comprenant une unité de commande (4) avec une unité de mémoire (5), destinée au stockage consultable de données, ainsi qu'une unité de calcul (6) qui est conçue pour traiter les données stockées dans l'unité de mémoire (5) et générer, à partir de ces données, des signaux de direction (LS) pour l'activation d'un dispositif de direction (8) de la machine de travail (2), sachant que
le système de commande (1) est conçu pour exécuter un mode d'apprentissage aux fins de recueillir, dans le mode d'apprentissage, des données d'un comportement de direction et de déplacement qui est basé sur au moins une manœuvre de direction commandée manuellement par un opérateur, et pour les enregistrer de manière consultable dans l'unité de mémoire (5) en tant qu'au moins un déroulement de commande (11, 11a) exécutable, **caractérisé en ce que** le mode d'apprentissage est un mode d'apprentissage initié manuellement, et **en ce que** le système de commande (1) est conçu pour déterminer, à l'aide de la définition d'un point de départ et d'un point final, le déroulement de commande (11, 11a) correspondant qui est stocké dans l'unité de mémoire (5) et comprend des manœuvres de direction exécutées entre ce point de départ et le point final dans un mode d'apprentissage exécuté précédemment, et pour l'exécuter.

2. Système de commande (1) selon la revendication 1, **caractérisé en ce que** le système de commande (1) est conçu pour appeler les déroulements de commande (11, 11a) exécutables stockés dans l'unité de mémoire (5), à un instant ultérieur, en fonction d'un événement.

3. Système de commande (1) selon la revendication 1 ou 2, **caractérisé en ce que** le système de commande (1) est conçu pour déclencher manuellement un déroulement de commande (11, 11a) exécutable, du fait d'une sélection par l'opérateur, et/ou automatiquement en fonction d'une situation de fonctionnement de la machine de travail agricole (2), détectée par le système de commande (1).

4. Système de commande (1) selon une des revendications 1 à 3, **caractérisé en ce que** le système de commande (1) est conçu pour comparer entre eux des déroulements de commande (11, 11a) qui ont été enregistrés au cours de modes d'apprentissage exécutés de manière répétée entre le même point de départ et le même point final, et pour les adapter.

5. Système de commande (1) selon une des revendications 1 à 4, **caractérisé en ce que** le système de commande (1) comprend au moins un dispositif capteur (10a, 10b, 10c, 10d, 10e), en particulier plusieurs dispositifs capteurs (10a, 10b, 10c, 10d, 10e), qui sont conçus pour fournir des données permettant de déterminer le comportement de direction et de déplacement pendant le mode d'apprentissage.

6. Système de commande (1) selon la revendication 5, **caractérisé en ce que** le système de commande (1) est conçu pour établir un lien temporel entre les données du dispositif capteur (10a, 10b, 10c, 10d, 10e), au nombre d'au moins un, et la manœuvre de direction exécutée manuellement par l'opérateur, pour les évaluer et pour les déposer dans le déroulement de commande (11, 11a) devant être mémorisé.

7. Système de commande (1) selon une des revendications précédentes, **caractérisé en ce que** le système de commande (1) est conçu pour procéder à la mémorisation du comportement de direction et de déplacement exécuté pendant le mode d'apprentissage, en fonction de la nature et/ou du type de dispositif (3) installé sur la machine de travail (2) et/ou tracté.

8. Système de commande (1) selon une des revendications 6 ou 7, **caractérisé en ce qu'**au moins un dispositif capteur (10c) optique est installé en tant que dispositif capteur (10a, 10b, 10c, 10d, 10e) sur la machine de travail (2) et est conçu pour la reconnaissance de l'environnement.

9. Système de commande (1) selon la revendication 8, **caractérisé en ce que** le système de commande (1) est conçu pour identifier, en fonction d'une exploitation des données d'images fournies par le dispositif capteur (10c) optique, au nombre d'au moins un, une situation de fonctionnement imminente pour laquelle le comportement de direction et de déplacement a déjà été enregistré et mémorisé pendant un mode d'apprentissage.

10. Système de commande (1) selon la revendication 9, **caractérisé en ce que** le système de commande (1) est conçu pour fournir, en fonction de la situation de fonctionnement imminente identifiée, au moins une proposition indiquant quelle manœuvre de direction peut être exécutée à l'aide des déroulements de commande (11, 11a) pour des comportements de direction et de déplacement stockés dans l'unité de mémoire (5).

11. Système de commande (1) selon une des revendications précédentes, **caractérisé en ce que** le système de commande (1) est conçu pour exécuter dans l'ordre inverse un déroulement de commande (11, 11a) extrait de l'unité de mémoire (5).

12. Procédé pour faire fonctionner un système de commande (1) destiné à diriger une machine de travail agricole (2) dotée d'au moins un dispositif (3) installé sur celle-ci et/ou tracté par celle-ci, le système de commande (1) comprenant une unité de commande (4), une unité de mémoire (5), destinée au stockage consultable de données, ainsi qu'une unité de calcul (6) servant à traiter des données stockées dans l'unité de mémoire (5) afin de générer, à partir de ces données, des signaux de direction (LS) avec lesquels est activé un dispositif de direction (8) de la machine de travail (2), **caractérisé en ce que** un mode d'apprentissage initié manuellement est exécuté, lors duquel des données d'un comportement de direction et de déplacement qui se base sur au moins une manœuvre de direction commandée manuellement par un opérateur sont recueillies et stockées de manière consultable en tant que déroulement de commande (11, 11a) exécutable dans l'unité de mémoire (5), et **en ce que** l'on détermine, à l'aide d'une définition d'un point de départ et d'un point final, le déroulement de commande (11, 11a) correspondant qui est stocké dans l'unité de mémoire (5) et comprend des manœuvres de direction exécutées entre ce point de départ et ce point final, dans un mode d'apprentissage exécuté précédemment, et on l'exécute.

13. Procédé selon la revendication 12, **caractérisé en ce que**, en fonction d'une situation de fonctionnement identifiée de la machine de travail agricole (2) ou d'un déclenchement manuel par l'opérateur, un déroulement de commande (11, 11a) exécutable, stocké dans l'unité de mémoire (5), est appelé et exécuté par le système de commande (1) pour diriger la machine de travail agricole (2).

14. Procédé selon la revendication 12 ou 13, **caractérisé en ce que** l'on identifie en tant que comportement de déplacement, l'ensemble des déroulements allant au-delà du guidage, qui sont initiés par l'opérateur et sont exécutés par la machine de travail (2) pendant une manœuvre de direction à enregistrer, et on les associé au déroulement de commande (11, 11a).
